# FASCICULE DE BREVET EUROPEEN

(11) **EP 2 852 490 B1**
(45) Date de publication et mention de la délivrance du brevet: **11.04.2018**
(21) Numéro de dépôt: 13729984.8
(22) Date de dépôt: 17.05.2013
(51) Int. Cl.: B29C 65/08, B29C 65/74, B23K 20/10, B23K 20/26, B29C 65/00

(54) **APPAREIL POUR LA SOUDURE ET/OU LA COUPE PAR ULTRASONS D'UN ARTICLE THERMOFUSIBLE**
VORRICHTUNG ZUM ULTRASCHALLSCHWEISSEN UND/ODER SCHNEIDEN EINES THERMOSCHMELZBAREN ARTIKELS
APPARATUS FOR ULTRASONIC WELDING AND/OR CUTTING OF A THERMOFUSIBLE ARTICLE

(30) Priorité: 23.05.2012 FR 1254673
(43) Date de publication de la demande: 01.04.2015
(73) Titulaire: Spoolex, 42230 Roche La Moliere (FR)
(72) Inventeur: MAGNERON, Frédéric, F-42600 Montbrison (FR); PFISTER, Cédric, F-42100 Saint Etienne (FR)
(74) Mandataire: Cabinet Laurent & Charras
(86) Numéro de dépôt international: PCT/FR2013/051088
(87) Numéro de publication internationale: WO 2013/175109

(56) Documents cités:
- WO-A2-96/14202
- DE-A1-102009 002 296
- FR-A1- 2 874 188
- JP-A- 10 035 619
- JP-A- 10 045 114
- US-A- 3 294 616
- US-A- 4 410 383

## Description

L'invention se rattache au secteur technique des appareils à ultrasons pour des applications diverses et trouve une application avantageuse pour réaliser des opérations de soudure et/ou de coupe par ultrasons d'un article thermofusible.

Ces appareils utilisant des ultrasons comme source d'énergie pour des applications diverses sont parfaitement connus pour un homme du métier.

Pour l'essentiel ces appareils comprennent un générateur d'ultrasons dont les fréquences de vibrations sont transmises à un outil connu sous le nom de sonotrode, par l'intermédiaire d'un convertisseur à ultrasons qui applique à ladite sonotrode une vibration à fréquence ultrasonore.

Par exemple, ce type d'appareil comprend un corps présentant une partie recevant un support oscillant sur lequel est monté avec capacité de réglage un ensemble constitué du convertisseur et de la sonotrode. Ce corps présente une autre partie recevant un contre outil ou enclume disposé(e) en alignement et en opposition avec la sonotrode.

Par ailleurs, la fréquence ultrasonique est assujettie à des moyens aptes à modifier l'entrefer entre la sonotrode et l'enclume et à régler la pression exercée par ladite sonotrode.

Par exemple, le support recevant l'ensemble ultrasonique (convertisseur et sonotrode) est monté avec capacité d'articulation limitée par rapport au corps et est assujetti à un système de réglage de la pression sous forme d'un écrou qui agit sur un ressort pour obtenir une pression déterminée entre la sonotrode et l'enclume pour réaliser, par exemple, l'opération de soudure. De même, l'ensemble de l'appareil peut être équipé d'un axe de relevage actionnable à partir de l'extérieur du corps pour escamoter temporairement l'ensemble ultrasonique.

Les vibrations ultrasonores de la sonotrode produisent la fusion totale ou partielle de la zone de l'article thermofusible disposé entre la sonotrode et l'enclume. Généralement l'appareil est déplacé linéairement par rapport à l'article qui est fixe ou, inversement, l'article thermofusible est déplacé par rapport à l'appareil qui demeure fixe.

L'enclume peut être conformée pour réaliser simultanément un laminage et une coupe. Ou bien le corps de l'appareil est équipé d'une enclume constituée par une molette de soudage montée avec capacité de rotation, tandis qu'un organe de coupe est disposé en alignement linéaire avec la molette de soudage. L'article à traiter est engagé entre la sonotrode et la molette pour réaliser l'opération de laminage et assurer la coupe dans l'axe de laminage au fur et à mesure du déplacement linéaire relatif de l'appareil et de l'article avec, pour objectif, d'éviter tout effet d'effilochage.

Le plus souvent, pour le travail de l'article thermofusible, l'appareil est disposé de sorte que l'ensemble ultrasonique est situé au dessus de l'enclume. Il en résulte que l'ensemble exerce simplement par gravité une force d'appui sur ladite enclume dirigée de haut en bas en considérant le propre poids dudit ensemble ultrasonique. Par contre, il peut arriver que l'appareil soit utilisé en position renversée, c'est-à-dire que l'ensemble ultrasonique est situé en dessous de l'enclume. Dans une telle position, le poids de l'ensemble ultrasonique a tendance à écarter la sonotrode de l'enclume, modifiant par conséquent l'entrefer et la force de pression. DE 10 2009 002296 A1 divulgue un appareil pour la soudure par ultrasons d'un article thermofusible selon le préambule de la revendication 1.

Or, les moyens de réglage de l'entrefer de la pression que présente l'appareil, ne sont pas parfaitement adaptés, en étant notamment difficile d'accès et de manoeuvre, lorsque l'appareil se trouve dans une telle position.

L'invention s'est fixée pour but de remédier à ces inconvénients de manière simple, sûre, efficace et rationnelle.

Le problème technique que se propose de résoudre l'invention est de pouvoir facilement intervenir sur le réglage de l'entrefer et/ou de la pression lorsque l'appareil est utilisé en position renversée et plus généralement dans une position quelconque. Le but recherché est également de pouvoir simplement faire évoluer l'entrefer pour s'adapter à des variations éventuelles liées à la diversité des produits traités, et ceci même pour une position constante de l'appareil.

Pour résoudre un tel problème, il a été conçu et mis au point un appareil pour permettre la soudure et/ou la coupe à ultrasons d'un article thermofusible comprenant, de manière connue, un corps avec, d'une part, une partie recevant un support oscillant sur lequel est fixé avec capacité de réglage, un ensemble constitué d'un convertisseur et d'une sonotrode et, d'autre part, une partie recevant un contre outil ou enclume déposé(e) en alignement et en opposition avec la sonotrode, l'ensemble étant assujetti à des moyens aptes à modifier l'entrefer entre la sonotrode et l'enclume et la pression exercée par ladite sonotrode.

Compte tenu du problème posé à résoudre, l'appareil est équipé d'un moyen apte à ajuster avec précision et à maintenir le réglage de ladite pression et dudit entrefer, lorsque l'appareil est utilisé dans une position quelconque y compris en position renversée c'est-à-dire lorsquew l'ensemble est situé en dessous de l'enclume.

Le problème posé de réglage en position renversée de l'appareil est résolu en ce que le moyen de réglage est constitué par un axe excentrique actionnable en rotation à partir de l'extérieur du corps, ledit axe étant engagé, d'une part, dans le support et, d'autre part, dans la partie de corps recevant le support pour permettre sous un effet d'entraînement en rotation dudit axe, le décalage de quelques micromètres dudit support, afin de réajuster l'entrefer et la pièce.

L'axe présente une portée cylindrique doublement épaulée engagée librement en rotation dans l'épaisseur du support et de la partie du corps et une zone avec deux portées filetées en débordement dudit support, l'une desdites portées filetées recevant une molette de manoeuvre pour l'entraînement en rotation de l'axe tandis que l'autre reçoit un contre écrou de blocage.

La portée cylindrique doublement épaulée et les deux portées filetées sont désaxées pour créer une excentration sous l'effet de l'entrainement en rotation de l'axe.

L'axe est bloqué en translation. Dans une forme de réalisation l'extrémité de l'axe, à l'opposé de la molette de manoeuvre, coopère avec un moyen apte à réaliser une butée mécanique au réglage effectué.

L'invention trouve une application avantageuse dans le cas d'un appareil dans lequel le support est assujetti à un écrou de réglage de la pression qui agit sur un ressort pour plaquer l'axe de réglage et, par conséquent ledit support, sur la partie du corps recevant ledit axe afin d'obtenir une pression déterminée entre la sonotrode et l'enclume.

De manière connue le support est équipé d'un axe de relevage actionnable à partir de l'extérieur du corps et présentant un méplat pour permettre, lorsqu'il est entraîné en rotation d'un quart de tour, de relever l'ensemble fixé audit support pour assurer le réglage de l'entrefer.

L'invention est exposée ci-après plus en détail à l'aide des figures des dessins annexés dans lesquels :
- la figure 1 est une vue de face de l'appareil,

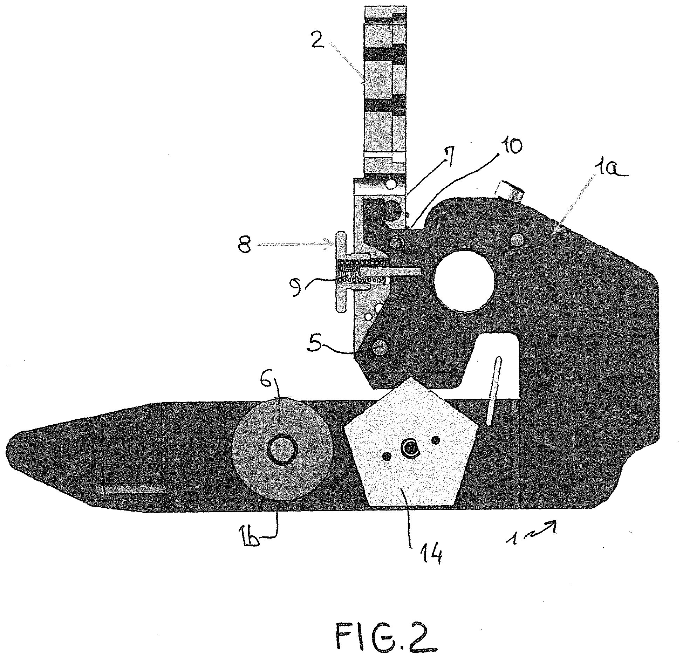

- la figure 2 est une vue en coupe longitudinale de l'appareil avant mise en place sur le support de l'ensemble ultrasonique,

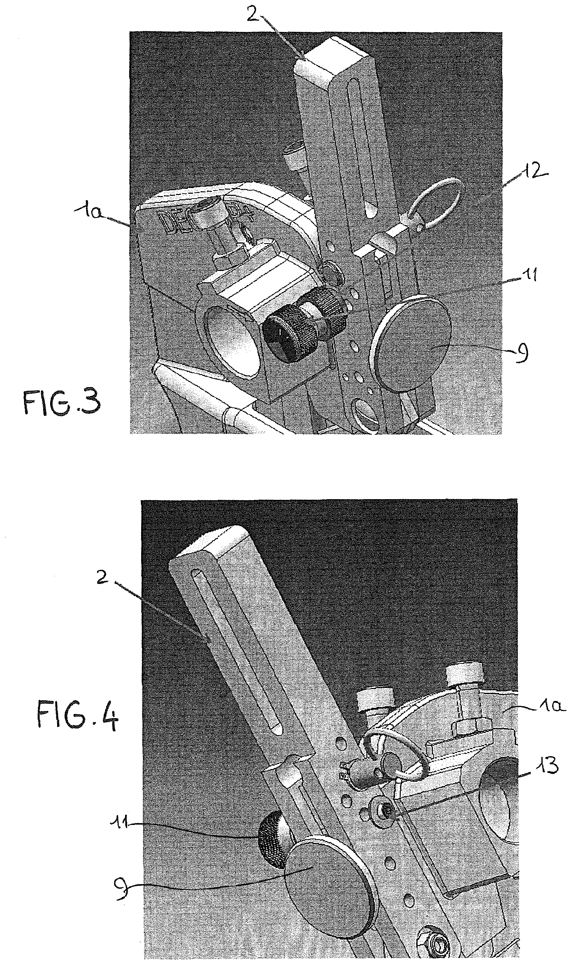

- la figure 3 est une vue en perspective d'une partie de l'appareil montrant le système de réglage de l'entrefer et de la pression selon l'invention,
- la figure 4 est une vue partielle en perspective montrant un exemple de réalisation du système de butée mécanique de l'axe de réglage,
- la figure 5 est une vue en perspective de l'axe de réglage équipé d'un organe de manoeuvre et d'un contre écrou de serrage,
- la figure 6 est une vue de face de l'axe montrant le désaxage,
- les figures 7, 8 et 9 sont des vues partielles en coupe à plus grande échelle montrant le principe de réglage du support oscillant en recevant l'entrefer ultrasonique au niveau de l'entrefer et de la pression entre la sonotrode et l'enclume,
- la figure 10 montre l'appareil en position renversée pour le travail d'un article thermofusible,

De manière connue, l'appareil comprend un corps (1) dont une partie (1a), reçoit un support oscillant (2) sur lequel est fixé, avec capacité de réglage, un ensemble constitué d'un convertisseur (3) et d'une sonotrode (4). Dans l'exemple illustré le support (2) constitue une chape articulée, au moyen d'un axe (5), sur une forme en sabot de la partie (1a).

Une autre partie (1b) du corps (1) constitue une embase ou semelle en formant sensiblement un col de signe avec le sabot (1a). Cette embase (1b) reçoit une contre outil ou enclume (6) disposé en alignement et en opposition avec la sonotrode (4).

D'une manière connue, le support oscillant (2) coopère avec un axe de relevage (7) et un écrou de réglage (8) de la pression entre la sonotrode (4) et l'enclume (6) pour la qualité du laminage. L'axe de relevage (7) est engagé transversalement dans l'épaisseur du support (2) et présente un méplat (7a) coopérant avec une butée (1c) que présente le sabot (1a). L'axe (7) est actionnable à partir de l'extérieur du corps, de sorte que, lorsqu'il est entraîné en rotation d'un quart de tour, le support (2) pivote par rapport à son axe (5) provoquant de manière concomitante le relevage que l'ensemble (3) et (4) pour le réglage de l'entrefer au moyen de cales d'épaisseur et cela de manière parfaitement connue pour un homme du métier.

Toujours de manière connue, le réglage de la pression est effectué par l'écrou de réglage (8) qui agit sur un ressort (9) en appui sur une partie du sabot (1a). Lorsque l'on agit sur l'écrou de réglage (8), le ressort exerce au niveau du sabot (1a), une force (F) ramenée sur le bout de la sonotrode (4).

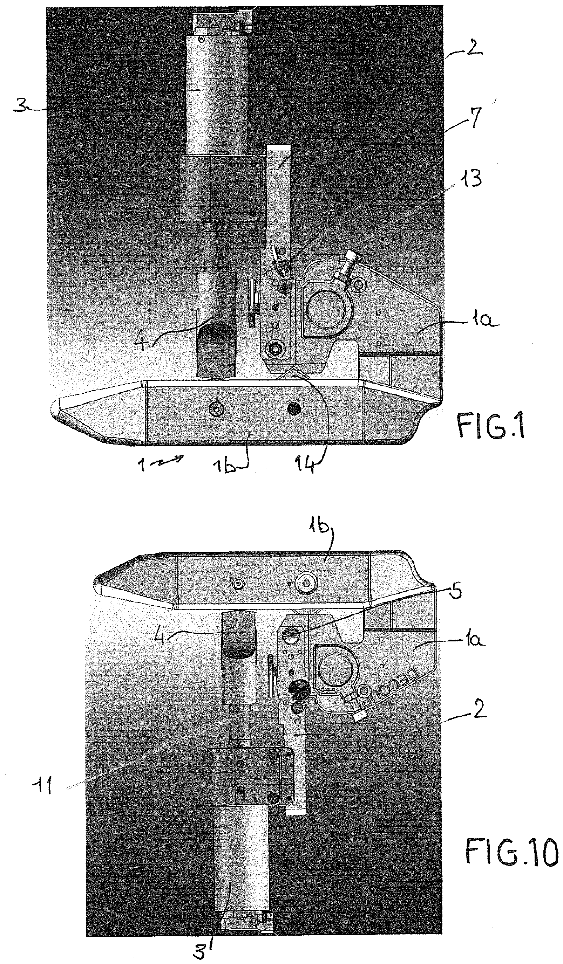

Ces moyens de réglage, notamment au niveau de la pression entre la sonotrode (4) et l'enclume (6) pour réaliser l'opération de laminage, après avoir réglé l'entrefer comme indiqué, donnent satisfaction dans une position de travail dite normale de l'appareil, c'est-à-dire lorsque l'ensemble convertisseur / sonotrode est disposé au-dessus de l'enclume (figure 1). En effet, dans ce cas, la pression a été réglée en tenant compte du poids de l'ensemble du convertisseur (3) et de la sonotrode (4) qui a tendance, sous l'effet de son propre poids, à faire plaquer par gravité la sonotrode (4) contre l'enclume (6).

Par contre, lorsque l'appareil, pour certaines applications, est utilisé en position inversée, c'est-à-dire que l'ensemble du convertisseur et de la sonotrode est situé en dessous de l'enclume (figure 10), le poids dudit ensemble a, inversement, tendance à écarter la sonotrode de l'enclume et, par conséquent, de modifier de quelques microns la pression. Pour remédier à cet inconvénient, selon l'invention, l'appareil est équipé d'un moyen apte à réajuster et à maintenir le réglage de ladite pression dudit entrefer dans cette position renversée.

Ce moyen de réglage est constitué par un axe excentrique (10) actionnable en rotation à partir de l'extérieur du corps (1). Cet axe (10) présente une portée cylindrique (10a) doublement épaulée et engagée librement en rotation dans l'épaisseur des ailes de la chape support (2) et du sabot (1a) du corps (1).

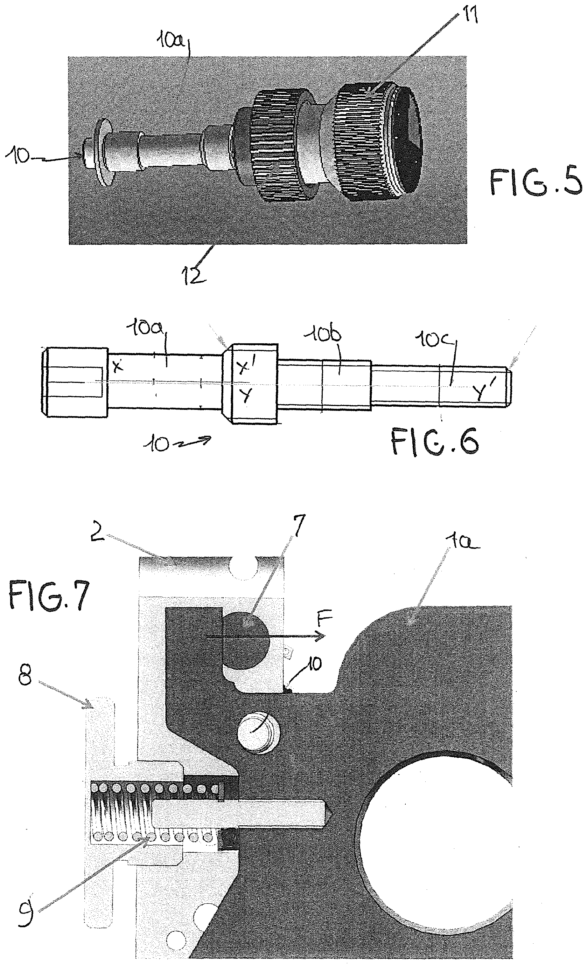

L'axe (10) présente également une zone avec deux portées filetées (10b) et (10c) qui, après engagement de la portée cylindrique (10a), apparaissent en débordement du corps (2). D'une manière importante, la portée cylindrique doublement épaulée (10a) et les deux portées filtées (10b) et (10c) sont désaxées pour créer une excentration sous l'effet de l'entraînement en rotation de l'axe (10). On renvoie plus particulièrement à la figure 6 qui montre le décalage de l'axe (X, X') de la portée cylindrique (10a) et de l'axe (Y, Y') des portées filtées (10b), (10c).

L'entraînement en rotation de l'axe (10) tel que défini, s'effectue au moyen d'une molette ou bouton de manoeuvre (11) visé en bout de la portée (10c).

Un contre écrou de serrage (12) est monté sur la portée filetée (10b) (figure 5).

On renvoie aux figures 7, 8 et 9 qui montrent le principe de réglage de l'entrefer et de la pression selon les caractéristiques de l'invention, notamment lorsque l'appareil est utilisé en position inversée (figure 10).

On observe tout d'abord que le perçage dans le sabot (1a) pour l'engagement de l'axe de réglage de l'entrefer (10), est déterminé au niveau de son diamètre et de sa position afin de ne pas gêner l'axe de relevage (7) quand l'étrave est en position ouverte, c'est-à-dire position basculée en arrière du support (2) recevant l'ensemble convertisseur (3) et sonotrode (4).

Dans un premier temps, le ressort (9), sous l'effet de serrage de la molette (8), a pour but de plaquer l'axe de réglage (10), donc la chape (2) sur le sabot (1a). Comme indiqué, la force (F) due au ressort est ramenée en bout de la sonotrode (4). Dans cette position, le nez (1c) du sabot est en appui contre le méplat (7a) de l'axe de relevage (7).

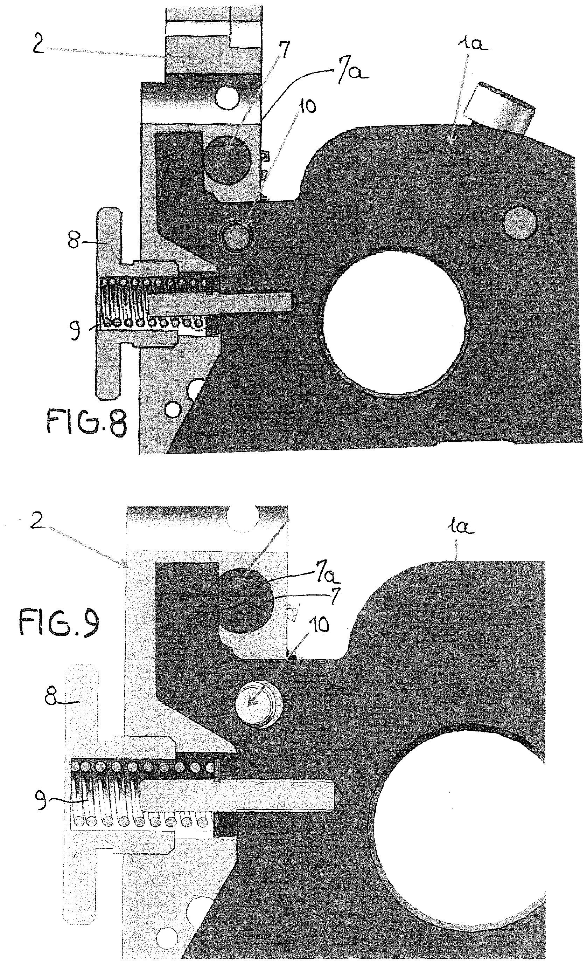

En tournant l'axe de réglage (10) au moyen du bouton (11), la chape se décale de quelques micromètres par rapport au sabot et plus particulièrement entre le nez (1c) du sabot et le méplat (7a) de l'axe de relevage (figure 9). Ce décalage résultant de la manoeuvre de l'axe de réglage (10), est ramené entre la sonotrode et l'enclume permettant de régler avec plus de précision, la pression et l'entrefer.

Bien évidemment, l'axe de réglage de l'entrefer (10) est bloqué en translation. Par exemple, l'extrémité de cet axe (10) à l'opposé du bouton de manoeuvre (11) coopère avec un moyen apte à réaliser une butée mécanique aux réglages effectués. Par exemple, l'extrémité de l'axe (10) présente un trou taraudé pour le visage d'une vis coopérant avec une rondelle (13).

Les avantages ressortent bien de la description, en particulier, on souligne et on rappelle la facilité de réglage de la pression et/ou de l'entrefer dans une position quelconque, y compris lorsque l'appareil est utilisé en position renversée afin de s'affranchir du poids exercé par l'ensemble convertisseur et sonotrode.

La démultiplication de ce moyen 10 permet en outre d'ajuster finement la valeur de l'entrefer aux produits à traiter, pour s'adapter simplement et avec précision aux différences d'épaisseur de la diversité desdits produits à traiter.

Bien évidemment, l'appareil tel que décrit et illustré peut présenter au niveau de l'embase (1b) du corps et en alignement avec l'enclume (6) un outil de coupe (14) pour réaliser, au fur et à mesure du déplacement relatif entre l'appareil et l'article thermofusible, une coupe dans l'axe médian du laminage obtenu. L'enclume (6) est constituée par une molette rotative.

De telles dispositions sont parfaitement connues dans ce type d'appareil.

## Revendications

1. Appareil pour la soudure et/ou la coupe par ultrasons d'un article thermofusible comprenant de manière connue un corps (1) avec, d'une part, une partie (1a) recevant un support oscillant (2) sur lequel est fixé avec capacité de réglage, un ensemble constitué d'un convertisseur (3) et d'une sonotrode (4) et, d'autre part, une partie (1b) recevant un contre outil ou enclume (6) déposé(e) en alignement et en opposition avec la sonotrode (4), l'ensemble étant assujetti à des moyens aptes à modifier l'entrefer entre la sonotrode (4) et l'enclume (6) et la pression exercée par ladite sonotrode (4) ***caractérisé* en ce qu'**il est équipé d'un moyen (10) sous forme d'un axe excentrique (10) actionnable en rotation à partir de l'extérieur du corps (1) et présentant une portée cylindrique (10a) doublement épaulée engagée librement en rotation dans l'épaisseur du support et d'une partie du corps recevant le support et une zone avec deux portées filetées (10b) et (10c) en débordement de ladite partie du corps (1a), l'une desdites portées filetées (10c) recevant une molette de manoeuvre (11) pour l'entraînement en rotation de l'axe (10) tandis que l'autre (10b) reçoit un contre écrou de blocage (12), un entraînement en rotation dudit axe provoquant un décalage de quelques micromètres dudit support, afin de réajuster avec précision et à maintenir le réglage de ladite pression et dudit entrefer lorsque l'appareil est utilisé dans une position quelconque y compris en position renversée, c'est-à-dire lorsque l'ensemble est situé en dessous de l'enclume.

2. Appareil selon la revendication 1 ***caractérisé* en ce que** la portée cylindrique doublement épaulée (10a) et les deux portées filetées sont désaxées pour créer une excentration sous l'effet de l'entrainement en rotation de l'axe.

3. Appareil selon l'une quelconque des revendications 1 à 2 ***caractérisé* en ce que** l'axe (10) est bloqué en translation.

4. _{Appareil} selon la revendication 3 ***caractérisé* en ce que** l'extrémité de l'axe (10), à l'opposé de la molette de manoeuvre, coopère avec un moyen apte à réaliser une butée mécanique au réglage effectué.

5. Appareil selon l'une quelconque des revendications 1 à 4 ***caractérisé* en ce que** le support (2) est assujetti à un écrou de réglage (8) de la pression qui agit sur un ressort (9) pour plaquer l'axe de réglage (10) et, par conséquent ledit support (2), sur la partie du corps (1a) recevant ledit axe afin d'obtenir une pression déterminée entre la sonotrode et l'enclume.

6. _{Appareil} selon l'une quelconque des revendications 1 à 5 ***caractérisé* en ce que** le support (2) est équipé d'un axe de relevage (7) actionnable à partir de l'extérieur du corps (2) et présentant un méplat (7a)pour permettre, lorsqu'il est entraîné en rotation d'un quart de tour, de relever l'ensemble (3) (4) fixé audit support (2) pour assurer le réglage de l'entrefer.

## Patentansprüche

1. Gerät zum Ultraschall-Schweißen und/ oder Schneiden eines heißschmelzenden Artikels, das in bekannter Weise ein Gehäuse (1) aus, erstens einem Teil (1a), das einen schwingenden Träger (2) aufnimmt, auf dem eine Baugruppe mit Steuerungskapazität befestigt ist, die aus einem Wandler (3) und einer Sonotrode (4) besteht, und zweitens einem Teil (1b) besteht, der ein Gegenstück oder einen Amboss (6) aufnimmt, die ausgerichtet an bzw. gegenüber der Sonotrode (4) angeordnet sind, wobei die Baugruppe von Vorrichtungen abhängt, die in der Lage sind, den Luftspalt zwischen der Sonotrode (4) und dem Amboss (6) sowie den Druck, der von dieser Sonotrode (4) ausgeübt wird, zu verändern, ***dadurch gekennzeichnet,* dass** es mit einer Vorrichtung (10) in Form einer exzentrischen Achse (10), die drehbar von außerhalb des Gehäuses (1) betätigt werden kann, und eine zylindrische Fläche (10a) mit doppelter Schulter aufweist, die freidrehend in der Dicke des Trägers sitzt, sowie mit einem Gehäuseteil ausgerüstet ist, die den Träger und eine Zone mit zwei Gewindeflächen (10b) und (10c) aufnimmt, die über diesen Teil (1a) des Gehäuses herausragen, wobei eine dieser Gewindeflächen (10c) nimmt einen Reglerrad (11) auf. mit dem die Achse (10) in Rotation angetrieben werden kann, während das andere (10b) eine Gegen-Sperrmutter (12) aufnimmt, wobei der Rotationsantrieb dieser Achse dazu führt, dass dieser Träger leicht um wenige Mikrometer versetzt wird, um diesen Druck und diese Luftspalt genau einstellen und halten zu können, wenn das Gerät in einer beliebigen Position verwendet wird, darin eingeschlossen die umgedrehte Position, also wenn sich die Baugruppe unter dem Amboss befindet.

2. Gerät nach Anspruch 1, ***dadurch gekennzeichnet,* dass** die zylindrische Fläche mit doppelter Schulter (10a) und die beiden Gewindeflächen versetzt sind, um eine Exzentrizität unter der Wirkung des Rotationsantriebs der Achse zu erzeugen.

3. Gerät nach einem der Ansprüche 1 bis 2, ***dadurch gekennzeichnet,* dass** die Achse (10) in Translation blockiert ist.

4. Gerät nach Anspruch 3, ***dadurch gekennzeichnet,* dass** das Endstück der Achse (10) gegenüber dem Reglerrad mit einer Vorrichtung zusammenarbeitet, die in der Lage ist, einen mechanischen Anschlag der durchgeführte Einstellung darzustellen.

5. Gerät nach einem der Ansprüche 1 bis 4, ***dadurch gekennzeichnet,* dass** der Träger (2) von einer Einstellmutter (8) des Drucks abhängt, die auf eine Feder (9) wirkt, um die Einstellachse (10) und dadurch diesen Träger (2), gegen den Gehäuseteil (1a) zu drücken, der diese Achse aufnimmt, um einen festgelegten Druck zwischen der Sonotrode und dem Amboss zu erhalten.

6. Gerät nach einem der Ansprüche 1 bis 5, ***dadurch gekennzeichnet,* dass** der Träger (2) mit einer Hubachse (7) ausgerüstet ist, die von außerhalb des Gehäuses (2) betätigt werden kann, und eine Abflachung (7a) aufweist, um zu ermöglichen, bei Drehung um eine Vierteldrehung, die Baugruppe (3) (4), die an diesem Träger (2) befestigt ist zu heben, um den Luftspalt einzustellen.

## Claims

1. Apparatus for the welding and/or the cutting, using ultrasound, of a thermofusible article incorporating, in a known manner, a body (1) with, firstly, one part (1a) accommodating an oscillating mounting (2) on which an assembly is secured, with an adjustment capability, consisting of a converter (3) and a sonotrode (4) and, secondly, one part (1b) accommodating a counterpart tool or anvil (6) placed in alignment and in opposition to the sonotrode (4), with the assembly being servo-controlled by a system capable of modifying the gap width between the sonotrode (4) and the anvil (6) and the pressure exerted by the said sonotrode (4), ***characterized in that*** it is equipped with a system (10) consisting of an off-center shaft (10) operable in rotation from the exterior of the body (1) and having a dual-shouldered cylindrical span (10a) engaged but able to rotate freely within the thickness of the mounting and one part of the body accommodating the mounting and an area with two threaded spans (10b) and (10c) protruding from the said part of the body (1a), with one of the aforesaid threaded spans (10c) accommodating an operating knurled wheel (11) to drive the rotation of the shaft (10), while the other (10b) accommodates a counterpart locking nut (12), with a driving of rotation of the aforesaid shaft causing a deflection of a few micrometers of the aforementioned mounting, so as to precisely readjust and maintain the adjustment of the said pressure and the said gap width when the apparatus is used in any position - including in an overturned position namely when the assembly is positioned below the anvil.

2. Apparatus according to claim 1, ***characterized in that*** the dual-shouldered cylindrical span (10a) and the two threaded spans are disaligned to create an eccentricity under the effect of the driving of rotation of the shaft.

3. Apparatus according to any one of claims 1 or 2, ***characterized in that*** the shaft (10) is prevented from sideways movement.

4. Apparatus according to claim 3, ***characterized in that*** the extremity of the shaft (10), being in opposition to the operating knurled wheel, inter-operates with a system able to exert a mechanical travel limitation on the adjustment applied.

5. Apparatus according to any one of claims 1 to 4, ***characterized in that*** the mounting (2) is interlocked with a nut (8) intended for adjustment of the pressure that acts on a spring (9) to press against the adjustment shaft (10) and, consequently, the aforesaid mounting (2), on the part of the body (1a) accommodating the said shaft, in order to obtain a determined pressure between the sonotrode and the anvil.

6. Apparatus according to any one of claims 1 to 5, ***characterized in that*** the mounting (2) is equipped with a lifting shaft (7) that can be actuated from the exterior of the body (2) and has a flat part (7a) to enable - when it is rotated one quarter of a revolution - lifting of the assembly (3) (4) secured to the aforesaid mounting (2) in order to adjust the gap width.
